# EUROPÄISCHE PATENTANMELDUNG

(11) **EP 4 052 582 A1**
(43) Veröffentlichungstag der Anmeldung: **07.09.2022**
(21) Anmeldenummer: 21160677.7
(22) Anmeldetag: 04.03.2021
(51) Int. Cl.: A21D 8/04, A21D 13/045, A21D 13/047, A23L 7/104

(54) **SPEISE AUS FERMENTIERTEN MISCHUNGEN UND DEREN HERSTELLUNG**

(71) Anmelder: Biener, Johannes, 8020 Graz (AT)
(72) Erfinder: Biener, Johannes, 8020 Graz (AT)
(74) Vertreter: Schiweck Weinzierl Koch Patentanwälte Partnerschaft mbB

(57) **Zusammenfassung**

Die vorliegende Erfindung betrifft ein Verfahren zum Herstellen einer breiigen Masse mit vorzugsweise hoher Porosität und/oder Elastizität unter Verwendung von (Pseudo-)Getreide, Hülsenfrüchten, und/oder Ölsaatgut. Die breiige Masse ist geeignet für die Produktion einer sehr porösen, sehr lockeren, nicht-klebrigen Speise. Die vorliegende Erfindung betrifft demzufolge ferner Speisen, welche durch solche Verfahren hergestellt werden können, die insbesondere für Menschen mit besonderen gesundheitlichen Bedürfnissen geeignet sind.

## Beschreibung

Die vorliegende Erfindung betrifft ein Verfahren zum Herstellen einer breiigen Masse mit vorzugsweise hoher Porosität und/oder Elastizität unter Verwendung von (Pseudo)Getreide, Hülsenfrüchten, und/oder Ölsaatgut. Die breiige Masse ist geeignet für die Produktion einer sehr porösen, sehr lockeren, nicht-klebrigen Speise. Die vorliegende Erfindung betrifft demzufolge ferner Speisen, welche durch solche Verfahren hergestellt werden können, die insbesondere für Menschen mit besonderen gesundheitlichen Bedürfnissen geeignet sind.

Vegetarische und vegane Speisen sind auch im europäischen Markt zunehmend gefragt. Gerade im asiatischen Raum gehören viele solche Speisen zur traditionellen Küche, bspw. Idli, eine fermentierte Teigspeise auf Basis von Uridbohnen und Reis. Neben pflanzlichen, kohlenhydrat- und proteinreichen Zutaten kommen hierbei in der Regel auch noch Gewürze und unterschiedliche Gemüse zum Einsatz, um neben dem Geschmack auch den Vitamingehalt der Speisen aufzuwerten. Während die traditionelle asiatische Küche bei der Fermentation des Teiges meist auf eine nicht oder wenig definierte Säuerungskultur zurückgreift, welche in der Regel nicht eigens zugesetzt wird, sondern sich spontan im Teig entwickelt, gibt es auch definierte Verfahren zur Durchführung von Säuerungs- und Gasungsprozessen bei der Fermentation solcher Teige (WO 2017/140796; CN 108029944).

Die bisher bekannten Herstellprozesse für solche vegetarischen und veganen Teigspeisen sind mit diversen Nachteilen verbunden. So können bei der Fermentierung mit spontan gebildeten Säuerungskulturen auch potentiell pathogene Mikroorganismen wie *Streptococcus faecalis* auftreten. Bei der bisher durchgeführten Fermentierungstechnik unter Einsatz von nicht-definierten Säuerungskulturen werden Speisen hergestellt, welche im Hinblick auf Porosität, Elastizität (Lockerheit) und Oberflächenstruktur unzureichende oder zumindest nur wenig zufriedenstellende Ergebnisse für eine Vermarktung in Europa aufweisen. Auch ist eine industrielle Fertigung ist kaum oder nicht durchführbar bzw. führt sie zu nicht zufriedenstellenden Produkten. Hinzukommt ein gerade für Diabetiker unzufriedenstellender glykämischer Index, da es durch die Struktur und Zusammensetzung der im Endprodukt enthaltenen Kohlenhydrate und Art der Ballaststoffe nach dem Verzehr zu einem schnellen Anstieg des Blutzuckerspiegels kommt, gefolgt von einem schnellen Abfall desselben.

Die vorliegende Erfindung, wie im Folgenden beschrieben und in den Ansprüchen definiert, löst die im Stand der Technik bestehende Problematik durch die Bereitstellung des erfinderischen Verfahrens zur Herstellung einer breiigen Masse, sowie der Bereitstellung von durch dieses Verfahren hergestellte oder herstellbare Speisen.

Die vorliegende Erfindung betrifft ein Verfahren zum Herstellen einer breiigen Masse, umfassend
(a) Quellen lassen von Getreide, Pseudogetreide, Hülsenfrucht und/oder Ölsaat;
(b) Nassvermahlen des gequollenen Getreides, Pseudogetreides, der Hülsenfrucht und/oder Ölsaat zu einer breiigen Masse;
(c) erstes Fermentieren der breiigen Masse unter Verwendung von Säure-bildenden Mikroorganismen; und
(d) zweites Fermentieren der bereits fermentierten breiigen Masse unter Verwendung von CO₂-bildenden Mikroorganismen.

Erstes und zweites Fermentieren findet vorzugsweise zeitlich und/oder räumlich getrennt voneinander statt.

Das erfindungsgemäße Verfahren kann weiterhin vorzugsweise umfassen (c') Abfüllen oder Überführen der einmal fermentierten Masse in ein anderes Gefäß.

Dieser Schritt (c') kann, muss aber nicht notwendigerweise erfolgen. Es ist nämlich auch möglich, die erste und zweite Fermentation, wie hierin beschrieben, zeitlich getrennt voneinander stattfinden zu lassen. Dies wird möglich, weil das erste und zweite Ferment, wie hierin beschrieben, unterschiedlich sind, was die Mikroorganismen betrifft. Die Mikrorganismen bei der ersten Fermentation bewirken Säurebildung. Die Mikroorgansimen bei der zweiten Fermentation bewirken Gasbildung. D.h. das zweite Fermentieren findet vorzugsweise zeitlich getrennt vom ersten Fermentieren statt, nämlich nach dem ersten Fermentieren. Der Schritt (c') ist dennoch ein bevorzugter Schritt des erfindungsgemäßen Verfahren.

Das erfindungsgemäße Verfahren kann den folgenden weiteren Schritt umfassen: (e) gegebenenfalls Mischen der zweifach fermentierten breiigen Masse(n).

Wie im Rahmen der vorliegenden Erfindung überraschend gefunden wurde, wird durch Einsatz des erfindungsgemäßen Verfahrens eine breiige Masse bzw. (Teig)Speise erzeugt, welche sich vorzugsweise durch hohen Stärkeanteil, hohen Anteil an Präbiotika und Ballaststoffen sowie Vitaminen (insbesondere Vitamin B-Komplexen und Omega-3-Fettsäuren) auszeichnet. Wesentlicher Bestandteil der Erfindung ist hierbei der mehrstufige, vorzugsweise zweistufige Fermentationsprozess (Trennung von Säure- und Gasbildung bei der Fermentation), welcher zu einer breiigen Masse bzw. (Teig)Speise mit vorzugsweise hoher Porosität und/oder Elastizität führt. Die breiige Masse kann, im Gegensatz zu Herstellungsverfahren im Stand der Technik, wegen der Trennung der Säure- und Gasbildung bei der mehrstufigen, vorzugsweise zweistufigen Fermentation, vor dem Garvorgang portioniert werden, so dass gleichmäßige Mengen der fermentierten, breiigen Masse für ein zu garendes Produkt der Garung unterzogen werden können. So entstehen gleichmäßige Produkte. Im Stand der Technik ist dies nicht möglich. Dort unterzieht man z.B. breiige Massen einer Fermentation, bei der gleichzeitig Säure- und Gas gebildet wird. Will man diese fermentierte breiige Masse portionieren, so stößt man insbesondere beim industriellen, automatischen Portionieren an Grenzen, weil die aufgegaste, breiige Masse zum einen wegen des in sie eingebrachten Gases nicht gleichmäßig portioniert werden kann und zum anderen, weil dabei das in die breiige Masse eingebrachte Gas beim Portioniervorgang entweicht. So hat man dann ungleichmäßig verteilte breiige Massen, sofern diese überhaupt portioniert werden können, und zudem breiige Massen, die kein oder nicht mehr ausreichend Gas enthalten, so dass sie beim Garvorgang nicht aufgehen, d.h. sitzen bleiben. So erhält man keine Produkte, die eine gewünschte Elastizität und/oder Porosität aufweisen. Die vorliegende Erfindung kann diese Problematik durch die mehrstufige, vorzugsweise zweistufige Fermentation beheben, wie hierin beschrieben.

Das erfindungsgemäße Verfahren ist vorzugsweise ein großtechnisches Verfahren. "Großtechnisch" bedeutet, dass die Schritte des erfindungsgemäßen Verfahrens maschinell automatisiert durchgeführt werden können. "Großtechnisch" bedeutet auch, dass mit dem erfindungsgemäßen Verfahren pro Arbeitstag zumindest 50 kg, 100 kg, 200 kg, 500 kg, 1000 kg, 2000 kg, 5000 kg, 10000 kg breiige Masse wie hierin beschrieben zu Speisen verarbeitet werden kann. Ein Arbeitstag bedeutet 12 bis 24 Stunden, vorzugsweise 12 Stunden.

"Quellen lassen" im Zusammenhang mit der vorliegenden Erfindung ist das Einweichen von Getreide, Pseudogetreide, Hülsenfrüchten und/oder Ölsaaten in Flüssigkeit, vorzugsweise Wasser. Hierzu werden das einzuweichende Getreide, Pseudogetreide, die Hülsenfrüchte und/oder Ölsaaten in reichlich Flüssigkeit zwischen 12 und 24 Stunden eingelegt. Die Flüssigkeit soll deshalb reichlich sein, weil es durch das Getreide, Pseudogetreide, die Hülsenfrüchte und/oder Ölsaaten aufgesogen wird. Daher sollte der Vorgang gelegentlich überprüft werden, damit das eingeweichte Getreide, Pseudogetreide, die Hülsenfrüchte und/oder Ölsaaten nicht "trockenfallen". Quellen lassen kann bei verschiedenen Temperaturen und/oder in unterschiedlicher Zeit stattfinden. Komponenten (Getreide, Pseudogetreide, Hülsenfrüchten und/oder Ölsaaten) mit unterschiedlichem Quellungsverhalten können auch getrennt gequollen werden und danach zusammengemischt verarbeitet werden.

Nassvermahlen " im Zusammenhang mit der vorliegenden Erfindung ist das Mahlen von Getreide, Pseudogetreide, Hülsenfrüchten und/oder Ölsaaten in bzw. unter Flüssigkeit, vorzugsweise Wasser.

"Fermentation" wird hierin auch gelegentlich als "Gärung" bezeichnet und andersherum. Beide Begriffe meinen den gleichen Vorgang. Gleiches gilt für die Begriffe "fermentieren" oder "gären".

Für eine Fermentation beim erfindungsgemäßen Verfahren wird ein Ferment verwendet. Das Ferment enthält Mikroorganismen, die in der Lage sind zu gären. Solche Mikroorgansimen sind allgemein bekannt und auch hierin beschrieben. Vorzugsweise enthält das Ferment für die erste Fermentation solche Mikroorganismen, die beim Gären Säure bilden, vorzugsweise Milchsäure. Vorzugsweise enthält das Ferment für die zweite Fermentation solche Mikroorganismen, die beim Gären Gas bilden, vorzugsweise Kohlendioxid (CO₂).

Damit die erste Fermentation stattfinden kann, wird vorzugsweise ein erstes Ferment in die breiige Masse eingebracht. D.h. das erste Ferment wird für die hierin beschriebene erste Fermentation verwendet. Damit die zweite Fermentation stattfinden kann, wird vorzugsweise ein zweites Ferment in die breiige Masse eingebracht. D.h. das zweite Ferment wird für die hierin beschriebene zweite Fermentation verwendet.

Das erste und zweite Ferment sind, wie hierin beschrieben, unterschiedlich. Das erste Ferment enthält hauptsächlich solche Mikroorganismen, die beim Gären Säure bilden, vorzugsweise Milchsäure. Das zweite Ferment enthält hauptsächlich solche Mikroorganismen, die beim Gären Gas bilden, vorzugsweise Kohlendioxid (CO₂).

Das erste Ferment wird vor der ersten Fermentation zugegeben. Vorzugsweise wird das erste Ferment mit der breiigen Masse gemischt bzw. unter die breiige Masse gemischt.

Das zweite Ferment wird vor der zweiten Fermentation zugegeben. Vorzugsweise wird das zweite Ferment mit der bereits fermentierten breiigen Masse gemischt bzw. unter die bereits fermentierte breiige Masse gemischt. Dies kann z.B. beim Abfüllen oder Umfüllen der bereits fermentierten breiigen Masse erfolgen.

Je nach Geschmacksrichtung können als das erste Ferment traditionelle Fermente, z.B. Säuerungskulturen verwendet werden. Für Diabetiker können z.B. definierte Kulturen verwendet werden, die kurzkettige Kohlehydrate weitgehend eliminieren.

Das erste Fermentieren und zweite Fermentieren im Zusammenhang mit der vorliegenden Erfindung sind voneinander getrennte Vorgänge. Getrennte Vorgänge in dem Sinn, dass beim ersten Fermentieren Säurebildung und beim zweiten Fermentieren Gasbildung stattfindet. Getrennte Vorgänge auch deswegen, weil das erste Fermentieren und das zweite Fermentieren vorzugsweise zeitlich voneinander getrennt stattfinden. Getrennte Vorgänge auch deswegen, weil das erste Fermentieren und das zweite Fermentieren vorzugsweise räumlich voneinander getrennt stattfinden. D.h. das erste und zweite Fermentieren findet vorzugsweise zeitlich und/oder räumlich getrennt voneinander statt. Bevorzugt ist, dass das erste Fermentieren und das zweite Fermentieren zeitlich und räumlich voneinander getrennt ablaufen. Die räumliche Trennung erfolgt vorzugsweise dadurch, dass die erste Fermentation und die zweite Fermentation nicht im gleichen Gefäß, sondern in unterschiedlichen Gefäßen stattfinden. Vorzugsweise wird dabei die nach der ersten Fermentation bereits fermentierte breiige Masse in ein anderes, d.h. neues Gefäß umgefüllt oder abgefüllt. Beim Umfüllen oder Abfüllen wird dann das zweite Ferment zugegeben, so dass die zweite Fermentation stattfinden kann.

Im Gegensatz zu einer Fermentation bei der sowohl Säure- und Gasbildung zugleich, z.B. räumlich gleichzeitig und/oder zeitgleich stattfinden, ist die Fermentation des erfindungsgemäßen Verfahrens mehrstufig, vorzugsweise zweistufig, d.h. Säurebildung und Gasbildung ist vorzugsweise voneinander getrennt. So findet bei der ersten Fermentation des erfindungsgemäßen Verfahrens vorzugsweise hauptsächlich Säurebildung, vorzugsweise nur Säurebildung und keine Gasbildung (CO₂) statt, während bei der zweiten Fermentation vorzugsweise hauptsächlich Gasbildung (CO₂), vorzugsweise nur Gasbildung (CO₂), stattfindet. Die Trennung von Säurebildung bei der ersten Fermentation bzw. die Gasbildung bei der zweiten Fermentation wird vorzugsweise durch unterschiedliches Ferment bewirkt. Die Trennung von Säure- und Gasbildung wird aber auch, wie hierin, beschrieben, vorzugsweise durch zeitlich und/oder räumliche Trennung der ersten und zweiten Fermentation bewirkt. Wie hierin beschrieben, kann die erste und zweite Fermentation vorzugsweise räumlich getrennt voneinander stattfinden. Vorzugsweise wird dabei die einmal fermentierte Masse in ein anderes Gefäß oder andere Gefäße abgefüllt, um dann einer zweiten Fermentation unterzogen zu werden. Bei diesem Abfüllen oder Umfüllen kann das zweite Ferment zugegeben werden. Vorzugsweise wird dabei das zweite Ferment unter die bereits fermentierte breiige Masse gemischt und/oder mit der bereits fermentierten breiigen Masse gemischt.

Die vorliegende Erfindung löst das Problem der Abstimmung von Säuerung und Gasbildung während einer Fermentation durch die Trennung dieser Prozesse in vorzugsweise zwei verschiedenen Fermentationen. Säuregrad und Gasbildung können dadurch unabhängig voneinander gesteuert und kontrolliert werden. In der ersten Fermentation werden durch eine Kombination von vorzugsweise homo- und heterofermentativen Milchsäurebakterien Säuren gebildet. Eine evtl. Gasbildung hierbei ist vernachlässigbar, da möglicherweise vorhandene Gase der ersten Fermentation bei der Einmischung des Ferments für die zweite Fermentation ausgetrieben werden. Vorzugsweise kommt es bei der ersten Fermentation zu keiner Gasbildung (CO₂), weil keine Gasbildenden Mikroorganismen verwendet werden, z.B. keine heterofermentativen Milchsäurebakterien. In der zweiten Fermentation findet die Gasbildung für eine schaumige Konsistenz des Produkts statt.

Vorzugsweise weist das erfindungsgemäße Verfahren einen Schritt (c") auf, nämlich Austreiben von Gasen der ersten Fermentation beim Einbringen des zweiten Ferments.

Vorzugsweise zwei aufeinanderfolgende, voneinander getrennte Fermentationen sind notwendig, um reproduzierbar eine Volumenvergrößerung wie hierin beschrieben zu erzielen. Mit der Volumenvergrößerung einher geht eine definierte Porengröße, Porenform und/oder Porenverteilung. Zudem wird durch die vorzugsweise zweistufige Fermentation, wie hierin beschrieben, auch der gewünschte Geschmack und/oder die gewünschte Textur erzielt. Außerdem wird dadurch die Verwendung von Abfüllautomaten (Dispenser etc.) für eine effiziente Produktionsweise ohne den Einsatz von Triebmitteln wie Backpulver möglich.

Für die erste Fermentation enthält das Ferment vorzugsweise hauptsächlich Mikroorganismen, die bei der Gärung Säure, vorzugweise Milchsäure, bilden, vorzugsweise sind dies homo-fermentative Milchsäurebakterien und/oder hetero-fermentative Milchsäurebakterien. In einer bevorzugten Ausführungsform enthalt das Ferment für die erste Fermentation nur Säurebildende Mikroorganismen, jedoch keine Gas-bildenden Mikroorganismen, z.B. enthält es keine heterofermentativen Milchsäurebakterien.

Für die zweite Fermentation enthält das Ferment vorzugsweise hauptsächlich Mikroorganismen, die bei der Gärung Gas, vorzugsweise Kohlendioxid (CO₂), bilden, vorzugsweise enthält das zweite Ferment nur Gas-bildende Mikroorganismen, vorzugsweise sind das Hefen, z.B. die Bäckerhefe (Saccharomyces ssp., vorzugsweise Saccharomyces cerevisiae). Während der Stand der Technik keine unterschiedlichen Fermente verwendet, z.B. WO 2017/140796, werden beim erfindungsgemäßen Verfahren unterschiedliche Fermente verwendet, die eben bei einer ersten Fermentation zur Säurebildung führen und bei einer zweiten Fermentation zur Gasbildung führen. Im Stand der Technik kommt es hingegen zeitgleich zur Säure- und Gasbildung. Zum einen, weil keine erste und zweite Fermentation, wie hierin beschrieben, durchgeführt wird und zum anderen, weil kein erstes und zweites Ferment, wie hierin beschrieben, verwendet wird. Insbesondere wird kein solches erstes Ferment verwendet, das vorzugsweise nur Säure-bildende Mikroorganismen enthält. Dies wird z.B. dadurch erreicht, wie hierin beschrieben, dass vorzugsweise keine Gasbildenden (CO₂) Mikroorganismen im ersten Ferment enthalten sind. Die Säure wird dabei während der ersten Fermentation in die breiige Masse eingebracht, genau so wie das Gas bei der zweiten Fermentation in die breiige Masse eingebracht wird. Wie hierin beschrieben, erlaubt die mehrstufige, vorzugsweise zweistufige Fermentation, dass die breiige Masse nach der ersten Fermentation verteilt werden kann, z.B. portioniert werden kann, ehe dann die zweite Fermentation stattfindet. Auf diese Weise bleibt das eingebrachte Gas in der breiigen Masse vorhanden, wodurch sie beim Fermentieren bzw. beim Garen ihr Volumen vervielfacht, wie hierin beschrieben. Durch die Volumenvervielfachung wird Porosität und/oder Elastizität erlangt, was nicht bzw. nur unzureichend möglich wäre, wenn die breiige Masse nach einer einstufigen Fermentation, d.h. Säure- und Gasbildung in einem Vorgang verteilt, z.B. portioniert werden würde. Auf diese Weise ist das erfindungsgemäße Verfahren vorteilhaft gegenüber dem Stand der Technik. Es führt u.a. dazu, dass das Volumen der dann gegarten Speise gegenüber Speisen aus dem Stand der Technik vergrößert ist, wodurch z.B. mehr und größere Poren vorhanden sind du/oder eine höhere Elastizität vorhanden ist. Das erfindungsgemäße Verfahren ermöglicht es, dass eine breiige Masse angesetzt werden kann, die in einer ersten Fermentation angesäuert wird, dann verteilt werden kann, um dann in einer zweiten Fermentation Gas in die breiige Masse einzubringen, das für Volumenvergrößerung, Porosität und/oder Elastizität der entstehenden Produkte, also Speisen sorgt.

D.h. das Problem des Transfers einer schaumigen Masse aus einem Behälter, z.B. Gärbehälter in andere Gefäße, z.B. Formen mit Hilfe von Dosiergeräten, bei dem die Masse zusammenfällt und ihren Gasgehalt verliert, wird durch die mehrstufige, vorzugsweise zweistufige Fermentation gelöst. Beispielsweise wird nach der ersten Fermentation (z.B. 8-14h) ein zweites Ferment, das CO₂-bildenden Mikroorganismen enthält, zugefügt und die breiige, angesäuerte Masse in z.B. Formen gefüllt, in denen die vorzugsweise kurzfristige zweite Fermentation (z.B. 15-25min) mit kontrollierter Gasbildung durchgeführt wird. Auf diese Weise ist eine Massenproduktion möglich, für die Dosiergeräte unumgänglich sind.

Durch die mehrstufige, vorzugsweise zweistufige Fermentation ist das mögliche Problem, Mischungen aus Komponenten (Getreide, Pseudogetreide, Hülsenfrüchten und/oder Ölsaaten) zu verarbeiten, die unter Umständen ein unterschiedliches Fermentationsverhalten (Säure- /Gasbildung) haben, ebenfalls durch die vorliegende Erfindung gelöst. Dies, weil die einzelnen Komponenten die erste Fermentation getrennt unter unterschiedlichen Bedingungen (Zeit, Temperatur, Art des Ferments) durchlaufen können und erst für die zweite Fermentation nach dem Überführen der einzelnen Komponenten in einem anderen Gefäß gemischt werden, z.B. in Dämpferformen gefüllt werden, in dem/in denen die zweite Fermentation stattfindet.

Für die Verarbeitung von europäischen Komponenten und Komponenten, die eine Retardierung des Blutzuckeranstiegs bewirken, ist diese Trennung von Säuerung und Gasbildung vorteilhaft.

Bei der hierin beschriebenen Säure handelt es sich hauptsächlich um Milchsäure, wenn eine homofermentative Milchsäuregärung stattfindet. Bei der heterofermentativen Milchsäuregärung kann neben Milchsäure auch noch Essigsäure entstehen. Es können bei der heterofermentativen Milchsäuregärung auch noch weitere organische Säuren entstehen. Es können auch sehr geringe Mengen an Alkohol entstehen, der aber beim Garvorgang abdampft. Vorzugsweise ist die hierin beschriebene Säure aber Milchsäure (Laktat).

Bei dem hierin beschriebenen Gas handelt es sich hautsächlich um Kohlendioxid (CO₂), das z.B. bei der alkoholischen Gärung oder auch heterofermentativen Milchsäuregärung entsteht.

Es ist nicht ausgeschlossen, dass bei der ersten Fermentation des erfindungsgemäßen Verfahrens auch Gas entsteht. Bevorzugt ist aber, dass bei der ersten Fermentation hautsächlich Säure, vorzugsweise nur Säure entsteht, d.h. es entsteht vorzugsweise kein Gas (CO₂). Dies wird dadurch erreicht, dass das zugegebene erste Ferment vorzugsweise solche Mikroorganismen enthält, die nur Säure bilden, z.B. durch Milchsäuregärung, vorzugsweise homofermentative Milchsäuregärung.

Es ist nicht ausgeschlossen, dass bei der zweiten Fermentation des erfindungsgemäßen Verfahrens auch Säure, z.B. Milchsäure und/oder Essigsäure entsteht. Bevorzugt ist aber, dass bei der zweiten Fermentation hautsächlich Gas, vorzugsweise nur Gas entsteht. Dies wird dadurch erreicht, dass das zugegebenen Ferment vorzugsweise solche Mikroorganismen enthält, die nur Gas bilden, z.B. eine "Hefegärung" durchführen, bei der CO₂ entsteht. Es kann aber auch ein solches Ferment als zweites Ferment verwendet werden, bei dem Gas-bildende und Säure-bildende Mikroorganismen vorhanden sind.

In einer bevorzugten Ausführungsform enthält das erste Ferment Mikroorganismen, die Säure- und Gas (CO₂) bilden, jedoch nicht mehr als 2 Vol% Gas (CO₂), vorzugsweise nicht mehr als 1,5 Vol% Gas (CO₂), z.B. 1 Vol% Gas (CO₂) und das zweite Ferment solche Mikroorganismen, die Säure- und Gas (CO₂) bilden können. D.h. bei der ersten Fermentation werden Säure- und Gas (CO₂) bildende Mikroorgansimen, jedoch nicht mehr als 2 Vol% Gas (CO₂), vorzugsweise nicht mehr als 1,5 Vol% Gas (CO₂), z.B. 1 Vol% Gas (CO₂) bildende Mikroorganismen wie hierin beschrieben und bei der zweiten Fermentation werden Gas (CO₂)- und Säurebildende Mikroorgansimen verwendet

In einer anderen bevorzugten Ausführungsform enthält das erste Ferment Mikroorganismen, die nur Säure bilden und das zweite Ferment solche Mikroorganismen, die Säure- und Gas (CO₂) bilden können. D.h. bei der ersten Fermentation werden nur Säure bildende Mikroorganismen wie hierin beschrieben und bei der zweiten Fermentation werden Gas (CO₂)- und Säurebildende Mikroorgansimen verwendet.

In einer weiteren, anderen bevorzugten Ausführungsform enthält das erste Ferment Mikroorganismen, die nur Säure bilden und das zweite Ferment nur solche Mikroorganismen, die Gas (CO₂) bilden können. D.h. bei der ersten Fermentation werden nur Säure bildende Mikroorganismen wie hierin beschrieben und bei der zweiten Fermentation nur Gas (CO₂) bildende Mikroorgansimen verwendet.

Auch erlaubt das erfindungsgemäße Verfahren durch den zweistufigen Fermentationsprozess eine effizientere und damit industrielle Herstellung, weil eine Abfüllanlage (Dispenser) der aufgegasten breiigen Masse im Fall einer einstufigen Fermentation (zeitgleiche Säure- und Gasbildung) beim Dispensieren das bei der Fermentation in die breiige Masse eingetragene Gas im wahrsten Sinne des Wortes "ablässt" und die dispensierte, '"zusammengesessene" breiige Masse beim Garen nicht mehr aufgeht. Im Fall der vorliegenden Erfindung bewirkt die mehrstufige Fermentation, vorzugsweise eine zweistufige Fermentation, dass die breiige Masse nach dem zweiten Fermentieren ihr Volumen vorzugweise verdoppelt (2-fache Volumenvergrößerung), mehr bevorzugt ihr Volumen um das zweieineinhalbfache zunimmt (2,5-fache Volumenvergrößerung) oder sogar ihr Volumen verdreifacht (3-fache Volumenvergrößerung).

Die Mischung der Zutaten aus Schritt (a) des vorliegenden erfindungsgemäßen Herstellverfahrens kann grundsätzlich in beliebiger Konstellation oder Kombination erfolgen.

Mögliche Konstellationen oder Kombinationen sind:
- Getreide, Pseudogetreide, Hülsenfrucht oder Ölsaat,
- Getreide und Pseudogetreide oder Getreide und Hülsenfrucht oder Getreide und Ölsaat oder Pseudogetreide und Hülsenfrucht oder Pseudogetreide und Ölsaat oder Hülsenfrucht und Ölsaat,
- Getreide, Pseudogetreide und Hülsenfrucht oder Pseudogetreide, Hülsenfrucht und Ölsaat oder Getreide, Hülsenfrucht und Ölsaat oder Getreide, Pseudogetreide und Ölsaat, oder
- Getreide, Pseudogetreide, Hülsenfrucht und Ölsaat.

In einer Ausführungsform der vorliegenden Erfindung werden mindestens ein Getreide und/oder mindestens ein Pseudogetreide mit mindestens einer Hülsenfrucht und/oder mindestens einem Ölsaatgut quellen gelassen. Die jeweiligen Zutaten können dabei entweder in einem gemeinsamen Gefäß oder getrennt voneinander quellen gelassen werden. Dem Fachmann sind übliche Quellzeiten für Getreide, Pseudogetreide, Hülsenfrüchte bzw. Ölsaaten bekannt. Vorzugsweise ist die Quellzeit im Fall der vorliegenden Erfindung für Getreide, Pseudogetreide, Hülsenfrüchte und/oder Ölsaaten 6 bis 14 Stunden.

"Getreide", wie sie im erfindungsgemäßen Verfahren eingesetzt werden bzw. in den erfindungsgemäß hergestellten oder herstellbaren Speisen enthalten sein können, umfassen grundsätzlich alle Getreidesorten wie dem Fachmann bekannt, insbesondere körnerhaltige, meist einjährige Süßgräser. In besonderen Ausführungsformen der vorliegenden Erfindung handelt es sich bei Getreide, das in Schritt (a) des hier bereitgestellten und erfindungsgemäßen Verfahren quellen gelassen wird, beispielsweise um Reis, Weizen, Dinkel, Hafer, Gerste, Roggen, Mais, Echte Hirse, Sorghum Hirse, Zwerghirse, Bambussamen, oder Triticale, bevorzugt Reis, Weizen, Dinkel, Hafer, Gerste, Roggen, Mais oder echte Hirse. Falls glutenfreie Produkte hergestellt werden sollen, kommen erfindungsgemäß bevorzugt glutenfreie Getreide in Schritt (a) zum Einsatz, beispielsweise Mais, Reis, echte Hirse oder Bambussamen, bevorzugt Mais, Reis, oder echte Hirse. "Glutenfrei" hat in diesem Zusammenhang dieselbe Bedeutung wie von der WHO (World Health Organization) und FAO (Food and Agricultural Organization) festgesetzt bzw. beschreibt einen Gehalt von unter 20 ppm Gluten.

"Pseudogetreide", wie sie im erfindungsgemäßen Verfahren eingesetzt werden bzw. in den erfindungsgemäß hergestellten oder herstellbaren Speisen enthalten sein können, umfassen grundsätzlich alle Pseudogetreidesorten wie dem Fachmann bekannt, insbesondere körnerhaltige, glutenfreie Pflanzen, die nicht zu den Süßgräsern gehören, aber ähnlich wie Getreide zur Herstellung von Nahrungsmitteln für den Menschen verwendet werden. Aufgrund des Mangels an Gluten können erfindungsgemäß auch Pseudogetreide in Schritt (a) des vorliegenden Verfahrens zum Einsatz kommen für den Fall, dass glutenfreie Produkte hergestellt werden sollen (optional statt Getreide wie oben beschrieben oder zusätzlich zu glutenfreiem Getreide). In besonderen Ausführungsformen der vorliegenden Erfindung handelt es sich bei Pseudogetreide, das in Schritt (a) des hier bereitgestellten und erfindungsgemäßen Verfahren quellen gelassen wird, beispielsweise um Buchweizen (bspw, *Fagopyrum esculentum*), Sesam (bspw. *Sesamum indicum*), Amaranth, Quinoa (bspe. *Chenopodium quinoa*) oder Chia (bspw. *Salvia hispanica*).

"Hülsenfrüchte", wie sie im erfindungsgemäßen Verfahren eingesetzt werden bzw. in den erfindungsgemäß hergestellten oder herstellbaren Speisen enthalten sein können, umfassen grundsätzlich alle Hülsenfrüchte wie dem Fachmann bekannt, insbesondere die (meist luftgetrockneten) Samen von Leguminosen. Aufgrund ihres hohen Proteingehalts können Hülsenfrüchte im Zusammenhang mit der vorliegenden Erfindung insbesondere dann eingesetzt werden, wenn proteinreiche Produkte hergestellt werden sollen. In besonderen Ausführungsformen der vorliegenden Erfindung handelt es sich bei Hülsenfrüchten, die in Schritt (a) des hier bereitgestellten und erfindungsgemäßen Verfahren quellen gelassen werden, beispielsweise um Linsen, Bohnen, Erbsen, Erdnüsse, Kichererbsen, Soja oder Süßlupinen. Sofern Hülsenfrüchte im erfindungsgemäßen Verfahren eingesetzt werden, beträgt ihr Anteil in einer Ausführungsform mindestens 30% bezogen auf das Trockengewicht aller Zutaten, die dann im erfindungsgemäßen Verfahren verwendet werden, insbesondere zu Beginn des Verfahrens dem Schritt (a) des erfindungsgemäßen Verfahren zugeführt werden.

"Ölsaat" oder "Ölsaaten", wie sie im erfindungsgemäßen Verfahren eingesetzt werden bzw. in den erfindungsgemäß hergestellten oder herstellbaren Speisen enthalten sein können, umfassen grundsätzlich alle Ölsaaten wie dem Fachmann bekannt, insbesondere Pflanzensamen, welche zur Gewinnung von Pflanzenöl gewonnen werden können. In besonderen Ausführungsformen der vorliegenden Erfindung handelt es sich bei Ölsaaten, die in Schritt (a) des hier bereitgestellten und erfindungsgemäßen Verfahren quellen gelassen werden, beispielsweise um Kürbiskerne, Leinsamen, Hanfsamen oder Mohnsamen.

Das Nassvermahlen gemäß Schritt (b) des erfindungsgemäßen Herstellverfahrens der jeweiligen Zutaten Getreide, Pseudogetreide, Hülsenfrucht, und/oder Ölsaat (bevorzugt Getreide und/oder Pseudogetreide mit Hülsenfrucht und/oder Ölsaat) wie oben beschrieben kann sowohl getrennt für jede der genannten Zutaten erfolgen, oder eine oder mehrere dieser Zutaten können gemeinsam nassvermahlen werden. Vorzugsweise erfolgt Schritt (b), also das Nassvermahlen unmittelbar, d.h. sofort nach Schritt (a), dem Quellen lassen.

Die in Schritt (b) des erfindungsgemäßen Verfahrens erzeugte nassvermahlene, breiige Masse wird anschließend in einem Schritt (c) einer Fermentierung unter Verwendung von Säure-bildenden Mikroorganismen (erstes Ferment) unterzogen. Grundsätzlich können hierbei alle für die Herstellung von Lebens- und Futtermitteln geeigneten Säure-bildenden Mikroorganismen verwendet werden, bevorzugt aber Milchsäure-bildende Mikroorganismen (bspw. unter Durchführung von homofermentativer oder heterofermentativer Milchsäuregärung), bspw. *Lactobacillus* sp., *L. plantarum, L. fermentum, L. paracasei, L. paralimentarius, L. helveticus, Leuconostoc* sp., *L. argentinum, L. mesenteroides, L. lactis, oder L. rhamnosus.* In einer bevorzugten Ausführungsform werden nur Säure-bildende Mikroorgansimen verwendet, z.B. homofermentative Milchsäurebakterien.

Vorzugsweise wird kein *Leuconostoc ssp.* z.B. *L. mesenteroides* und/oder *L*. *plantarum* und/oder *Pediococcus ssp.,* z.B. *Pediococcus pentasaceus* verwendet. Vorzugsweise wird *Leuconostoc ssp.* z.B. *L. mesenteroides* und/oder *L. plantarum* nicht im ersten Ferment und/oder zweiten Ferment in Kolonie bildenden Einheiten (colony forming unit = cfu) von zumindest 10⁵ cfu, 10⁶ cfu, 10⁷ cfu oder mehr pro Gramm (g) breiige Masse (im Englischen "batter") zugegeben, d.h. 10⁵ cfu/g batter, 10⁶ cfu/g batter, 10⁷ cfu/g batter oder mehr werden vorzugsweise nicht im ersten Ferment und/oder zweiten Ferment bzw. in der ersten und/oder zweiten Fermentation zur breiigen Masse (= im Englischen "batter") zugegeben. Vorzugsweise wird im ersten Ferment und/oder zweiten Ferment bzw. in der ersten und/oder zweiten Fermentation *L. plantarum* und *Leuconostoc ssp.* nicht im Verhältnis zwischen 1:1 bis 20:1 eingesetzt.

Wenn im ersten Ferment und/oder zweiten Ferment *Leuconostoc ssp.* z.B. *L*. *mesenteroides* und/oder *L. plantarum* verwendet wird/werden, dann wird/werden *Leuconostoc ssp.* z.B. *L. mesenteroides* und/oder *L. plantarum* im ersten Ferment und/oder zweiten Ferment vorzugsweise in Kolonie bildenden Einheiten (colony forming unit = cfu) von weniger als 10⁵ cfu, 10⁴ cfu, 10³ cfu oder weniger pro Gramm (g) breiige Masse (im Englischen "batter") zugegeben, d.h. weniger als 10⁵ cfu/g batter, 10⁴ cfu/g batter, 10³ cfu/g batter oder weniger werden vorzugsweise im ersten Ferment und/oder zweiten Ferment bzw. in der ersten und/oder zweiten Fermentation zur breiigen Masse (= im Englischen "batter") zugegeben.

Vorzugsweise enthält das zweite Ferment bzw. werden bei der zweiten Fermentation Mikroorganismen der Familie Saccharomycetaceae eingesetzt, insbesondere *Saccharomyces ssp.,* vorzugsweise *S*. *cerevisiae.* Vorzugsweise enthält das zweite Ferment keine *Debaryomyces ssp.* Hefen, z.B. *Debaryomcyes hansenii* oder andere *Debaryomyces* Species. D.h. im ersten Ferment bzw. bei der ersten Fermentation werden vorzugsweise Mikroorganismen der Familie Saccharomycetaceae eingesetzt, insbesondere *Saccharomyces ssp.,* vorzugsweise *S*. *cerevisiae,* ausschließlich *Debaryomyces ssp.,* z.B. *Debaryomyces hansenii* oder andere *Debaryomyces* Species.

Die Fermentation in Schritt (c) des vorliegenden erfindungsgemäßen Verfahrens wird in einer Ausführungsform etwa 8 bis 14 h lang durchgeführt, bevorzugt bei 30 °C oder mehr, besonders bevorzugt 30 °C bis 36 °C, besonders bevorzugt 30 °C bis 34 °C, insbesondere bevorzugt 30°C bis 32°C. Die Fermentation wird vorzugsweise bei einem geschmacklich definierten, pH-kontrollierten Säuerungsgrad beendet. Die Menge des zugegebenen Ferments hängt von der gewählten Fermentationszeit ab, liegt aber vorzugsweise bei 0,5-3% der zu vergärenden Masse (Nassgewicht)]. In diesem ersten Fermentationsschritt werden erfindungsgemäß insbesondere Geschmacksstoffe eingebracht und Kohlenhydrate so abgebaut, dass ein gewünschter, positiver glykämischer Index erreicht wird.

Im Schritt (c) können Einzelkomponenten, d.h. Getreide, Pseudogetreide, Hülsenfrüchte, Ölsaat in Kombinationen, wie im Folgenden beschrieben, fermentiert werden oder voneinander getrennt fermentiert werden. Für den Fall, dass die Einzelkomponenten getrennt fermentiert werden, können sie nach der getrennten Fermentation miteinander gemischt werden.
Mögliche Kombinationen im Schritt (c) sind:
- Getreide und Pseudogetreide oder Getreide und Hülsenfrucht oder Getreide und Ölsaat oder Pseudogetreide und Hülsenfrucht oder Pseudogetreide und Ölsaat oder Hülsenfrucht und Ölsaat,
- Getreide, Pseudogetreide und Hülsenfrucht oder Pseudogetreide, Hülsenfrucht und Ölsaat oder Getreide, Hülsenfrucht und Ölsaat oder Getreide, Pseudogetreide und Ölsaat; oder
- Getreide, Pseudogetreide, Hülsenfrucht und Ölsaat.

Im Zusammenhang mit der vorliegenden Erfindung ist es bei dem hier beschriebenen und bereitgestellten Verfahren optional, alternativ aber auch bevorzugt, möglich, in einem Schritt (c') die einmal in Schritt (c) fermentierte Masse in ein anderes Gefäß abzufüllen. In einer bevorzugten Ausführungsform der vorliegenden Erfindung handelt es sich bei diesem neuen Gefäß um das Gefäß, welches dem Endprodukt (der Masse bzw. der (Teig)Speise) seine endgültige Form gibt. Durch diesen Schritt muss das gegorene Produkt später nicht nochmals überführt werden und das in Schritt (d) eingetragene Gas bleibt im Produkt weitestgehend erhalten, so dass es eine wünschenswerte Porosität und/oder Lockerheit beibehält. Die CO₂-bildenden Mikroorganismen, welche erfindungsgemäß in Schritt (d) des vorliegenden Verfahrens im zweiten Fermentationsschritt verwendet werden (zweites Ferment), können hierbei sowohl (unmittelbar) vor dem Umfüllen, während des Umfüllens, oder (unmittelbar) nach dem Umfüllen in ein neues Gefäß gemäß Schritt (c') wie hier dargestellt zugegeben werden.

Der Schritt (c') ist es, der der mehrstufigen, vorzugsweise zweistufigen Fermentation Rechnung trägt, insofern dass vor dem Abfüllen oder Überführen der einmal fermentierten Masse in diese Masse Säure bei der Fermentation eingebracht wurde, ehe nach dem Abfüllen oder Überführen in einer zweiten Fermentation Gas eingebracht wird.

In erfindungsgemäßen Zusammenhang mit dem hier vorliegenden und bereitgestellten Verfahren wird nach dem ersten Fermentieren unter Verwendung von Säure-bildenden Mikroorganismen in Schritt (c), bzw. nach der Abfüllung der so einmal fermentierten Masse in ein anderes Gefäß gemäß optionalem Schritt (c') wie oben beschrieben, ein zweiter Fermentierungsschritt (d) durchgeführt. In diesem Schritt (d) erfolgt erfindungsgemäß demnach ein zweites Fermentieren der bereits in Schritt (c) fermentierten breiigen Masse (ob in einem Schritt (c') in ein neues abgefüllt oder nicht) unter Verwendung von CO₂-bildenden Mikroorganismen. Es können hierbei grundsätzlich alle CO₂-bildenden Mikroorganismen eingesetzt werden, welche in der Herstellung von Lebens- und Futtermitteln verwendet werden können. In einer Ausführungsform der vorliegenden Erfindung handelt es sich bei dem CO₂-bildenden Mikroorganismus um Hefe, bspw. *Saccharomyces cerevisiae.* Die Fermentation in Schritt (d) des vorliegenden erfindungsgemäßen Verfahrens wird in einer Ausführungsform etwa 15 bis 25 min lang durchgeführt, bevorzugt bei 30 °C oder mehr, besonders bevorzugt 30 °C bis 36 °C, mehr bevorzugt 30 °C bis 34 °C, insbesondere bevorzugt 30°C bis 32°C. Die zweite Fermentation wird vorzugsweise durch einen Garvorgang (z.B. bei 1000C) beendet, wenn die Masse eine etwa vorzugsweise 2-fache Volumenzunahme (Volumenvergrößerung), vorzugsweise eine 2,5-fache Volumenzunahme oder sogar eine 3-fache Volumenzunahme erreicht hat. In diesem zweiten Fermentationsschritt werden erfindungsgemäß insbesondere Gase eingebracht, die der später gegarten Speise Porosität und Lockerheit verleihen.

Die Volumenzunahme kann vorzugsweise durch augenfällige oder impedanzsensorische Überprüfung kontrolliert. Vorzugsweise wird die Volumenzunahme an Hand der dann gegarten Speise, die vorzugsweise mit dem erfindungsgemäßen Verfahren erhalten wird, erhalten werden kann oder erhältlich ist durch Volumenverdrängung bestimmt werden. Dazu kann die Speise wasserdicht verpackt werden, z.B. durch Einschlagen in dünne Plastikfolie, z.B. Frischhaltefolie und in einen mit Wasser gefüllten Messbecher untergetaucht werden.

Im Schritt (d), also beim zweiten Fermentieren verdoppelt die bereits fermentierte breiige Masse unter Verwendung von CO₂-bildenden Mikroorganismen vorzugsweise ihr Volumen, mehr bevorzugt verzweieinhalbfacht oder sogar verdreifacht die bereits fermentierte breiige Masse unter Verwendung von CO₂-bildenden Mikroorganismen ihr Volumen.

Dem Fachmann ist bewusst, dass er vor der zweiten Fermentation zu der bereits fermentierten breiigen Masse CO₂-bildende Mikroorganismen zugibt, damit die zweite Fermentation ablaufen kann. Vorzugsweise mischt der Fachmann die bereits fermentierte breiige Masse mit den zugegebenen CO₂-bildenden Mikroorganismen.

Die nach Schritt (d) zweifach fermentierte(n) breiige(n) Masse(n) kann/können bei Bedarf gegebenenfalls in einem weiteren Schritt (e) gemischt werden.

Wie bereits beschrieben, ist es beim Herstellverfahren gemäß der vorliegenden Erfindung wesentlich, dass eine zweistufige Fermentation durchgeführt wird (s. Schritte (c) und (d) wie hier beschrieben). Überdies ermöglicht die zweistufige Fermentation (Trennung der Säure- und Gasbildung) die Überführung der angesäuerten breiigen Masse in ein neues Gefäß, um dort die zweite Fermentation durchzuführen (s. optionaler Schritt (c') wie hier beschrieben). Im industriellen Maßstab ist eine solche Überführung vor der zweiten Fermentation von Vorteil, weil eine Abfüllanlage (z.B. Dispensor) der aufgegasten breiigen Masse im Fall einer einstufigen Fermentation (zeitgleiche Säure- und Gasbildung) beim Dispensieren das Gas im wahrsten Sinne des Wortes ablässt und die dispensierte, ,"zusammengesessene", eingesackte breiige Masse beim Garen nicht mehr aufgeht. Die erfindungsgemäße Trennung von Säure- und Gasbildung ist also vorteilhaft bei der Herstellung des Produkts. Das optionale, alternativ aber auch bevorzugte Überführen bzw. Abfüllen des Produkts nach der ersten Fermentation (c) in ein neues Gefäß, das dem Produkt seine Endform gibt, um darin die zweite Fermentation (d) durchzuführen, ermöglicht es, die Gasbildung durchzuführen ohne das gegorene Produkt nochmals überführen zu müssen. Auf diese Weise bleibt das eingetragene Gas im Produkt, wohingegen es bei einer einstufigen Fermentation beim Überführen in seine Endproduktform das eingetragene Gas verliert. Auf diese Weise wird das Endprodukt seine Porosität und Lockerheit einbüßen. Bei dem erfindungsgemäßen Verfahren ist das nicht der Fall. Der Vorteil der zweistufigen Fermentation kommt insbesondere bei der maschinellen, industriellen Herstellung zum Tragen, weil eine Abfüllanlage, z.B. Dispensor eine Gas enthaltende breiige Masse zum einen nicht mehr standardisiert und in gleichen Gewichtsmengen in Gefäße übertragen kann, die dem Produkt die Endform geben und zum anderen der breiigen Masse insbesondere das eingetragene Gas entzieht, so dass sie beim Garen nicht mehr aufgeht. D.h. eine maschinelle, industrielle Fertigung ist bei einer einstufigen Fermentation nahezu unmöglich zu standardisieren, vor allem aber führt sie dazu, dass das Produkt beim Garen nicht mehr aufgeht und damit nicht brauchbar ist. In Summe bewirkt die zweistufige Fermentation zwei Vorteile: 1) sie verhilft dem Produkt zu Porosität und/oder Lockerheit und 2) sie erlaubt eine standardisierte, maschinelle und industrielle Herstellung. Ein weiterer Vorteil ist die kontrollierte Säurebildung mit einem gewünschten Ferment, die Kohlenhydrate z.B. so bereitstellen kann, dass das Produkt final einen sehr guten glykämischen Index aufweist, der insbesondere für Diabetiker wünschenswert ist.

Im Rahmen der vorliegenden Erfindung ist es weiterhin möglich, der Masse weitere Zusatzstoffe zuzugeben, bspw. Gewürze, Salz, Speiseöl, Süßungsmittel (bspw. Zucker), Milchprodukte, Nussmehl, zerkleinertes Gemüse (bspw. Wurzelgemüse oder Wurzelknollen wie Kartoffeln, Süßkartoffeln, Karotten), und/oder Mittel zur Feuchtigkeitserhöhung. Vorzugsweise werden die Zusatzstoffe nach der ersten und/oder nach der zweiten Fermentation zugegeben.

In einer Ausführungsform der vorliegenden Erfindung wird der herzustellenden Masse kein künstliches Treibmittel zugesetzt. Als "künstliche Treibmittel" wird hierbei generell eine Zutat verstanden, welche kein Säure-bildender oder CO₂-bildender Mikroorganismus ist wie er in Schritt (c) bzw. (d) des erfindungsgemäßen Verfahrens eingesetzt wird, welche aber nennenswert zu einer Ansäuerung und/oder Gasbildung beiträgt. Beispiele für solche "künstlichen Treibmittel" umfassen unter anderem Backpulver sowie Natron (NaHCO₃), KHCO₃, Weinsäure, Na₂H₂P₂O₇ (Dinatriumdihydrogendiphosphat; E450a), oder Monocalciumorthophosphat (E341a).

Die vorliegende Erfindung umfasst ferner eine breiige Masse, wie sie nach einem Verfahren wie hier oben dargestellt erhalten wird oder erhalten werden kann oder erhältlich ist.

Die vorliegende Erfindung umfasst ferner ein Verfahren zur Herstellung einer Speise, wobei zunächst das Verfahren wie hier oben beschrieben zur Herstellung einer breiigen Masse durchgeführt wird, und die breiige Masse anschließend gegart, bevorzugt dampfgegart wird.

Demnach betrifft die vorliegende Erfindung auch ein Verfahren zum Herstellen einer Speise, umfassend die hierin beschriebenen Schritte
(a) Quellen lassen von Getreide, Pseudogetreide, Hülsenfrucht und/oder Ölsaat;
(b) Nassvermahlen des gequollenen Getreides, Pseudogetreides, der Hülsenfrucht und/oder Ölsaat zu einer breiigen Masse;
(c) erstes Fermentieren der breiigen Masse unter Verwendung von Säure-bildenden Mikroorganismen;
(c') optional, alternativ aber auch bevorzugt, Abfüllen oder Überführen der einmal fermentierten Masse in ein anderes Gefäß;
(d) zweites Fermentieren der bereits fermentierten breiigen Masse unter Verwendung von CO₂-bildenden Mikroorganismen;
(e) gegebenenfalls Mischen der zweifach fermentierten breiigen Masse(n); und
(f) Garen der zweifach fermentierten breiigen Masse(n).

Erstes und zweites Fermentieren findet vorzugsweise zeitlich und/oder räumlich getrennt voneinander statt.

Das Garen erfolgt auf an sich dem Fachmann bekannte Weise, vorzugsweise durch Dampfgaren, Garen im kochenden Wasser, Frittieren, Rösten oder Braten. Garen im kochenden Wasser erfolgt vorzugsweise in geschlossenen Behältnissen, wie z.B. Schläuchen, z.B. in einem Wurstdarm.

Die vorliegende Erfindung umfasst ferner eine breiige Masse, die vorzugsweise mit dem erfindungsgemäßen Verfahren erhalten wird, erhalten werden kann oder erhältlich ist. Die hierin beschriebene breiige Masse, die mit dem erfindungsgemäßen Verfahren erhalten wird, erhalten werden kann oder erhältlich ist, wird vorzugsweise zu einer Speise für den menschlichen oder tierischen Verzehr, vorzugsweise den menschlichen Verzehr verarbeitet. D.h. die breiige Masse ist vorzugsweise ein Nahrungsmittel für Menschen oder Tiere, vorzugsweise Menschen.

Vorzugsweise weist die erfindungsgemäße breiige Masse, die vorzugsweise mit dem erfindungsgemäßen Verfahren erhalten wird, erhalten werden kann oder erhältlich ist Säurebildende Mikroorganismen, insbesondere Milchsäurebakterien und CO₂-bildenden Mikroorganismen, insbesondere Hefen auf. Die Säure-bildende Mikroorganismen, insbesondere Milchsäurebakterien kommen durch das erste Fermentieren in die breiige Masse. Die CO₂-bildenden Mikroorganismen, insbesondere Hefen, kommen durch das zweite Fermentieren in die breiige Masse. Breiige Massen, die im Stand der Technik bekannt sind, weisen nicht sowohl Säure-bildende Mikroorganismen, insbesondere Milchsäurebakterien als auch CO₂-bildenden Mikroorganismen, insbesondere Hefen auf, z.B. breiige Massen, wie in WO2017140796 beschrieben.

Vorzugsweise enthält die breiige Masse keine *Leuconostoc ssp.* z.B. *L*. *mesenteroides* und/oder *L. plantarum* und/oder *Pediococcus ssp.,* z.B. *Pediococcus pentasaceus.* Vorzugsweise enthält die breiige Masse *Leuconostoc ssp.* z.B. *L*. *mesenteroides* und/oder *L. plantarum* in einer Anzahl von weniger als 10⁷ cfu, 10⁶ cfu, 10⁵ cfu oder weniger pro Gramm (g) breiige Masse (im Englischen "batter") zugegeben, d.h. die breiige Masse enthält *Leuconostoc ssp.* z.B. *L. mesenteroides* und/oder *L. plantarum* in einer Anzahl von weniger als 10⁷ cfu/g batter, 10⁶ cfu/g batter, 10⁵ cfu/g batter oder weniger.

Vorzugsweise enthält die breiige Masse keine *Debaryomyces ssp.* Hefen, z.B. *Debaryomyces hansenii.*

Die vorliegende Erfindung umfasst ferner eine Speise, wie sie nach oben beschriebenem Verfahren zur Herstellung einer Speise erhältlich ist, erhalten wird oder erhalten werden kann. Wie hier beschrieben weist eine solche erfindungsgemäße Speise besondere Vorzüge hinsichtlich der Porosität, Elastizität (Lockerheit) und/oder der Hautstruktur (glatte Haut) auf.

Eine Speise der vorliegenden Erfindung, die vorzugsweise mit den erfindungsmäßen Verfahren erhältlich ist, erhalten wird oder erhalten werden kann weist vorzugsweise eine glatte Haut auf.

Eine Speise der vorliegenden Erfindung, die vorzugsweise mit den erfindungsmäßen Verfahren erhältlich ist, erhalten wird oder erhalten werden kann, weist Gasporen auf, die man mit bloßen Auge sehen kann. Die Größe der Gasporen ergibt sich durch die vorzugsweise Verdopplung, mehr bevorzugt Verzweieinhalbfachung oder sogar die Verdreifachung des Volumens der breiigen Masse beim zweiten Fermentieren. So kann man bei den erfindungsgemäß hergestellten oder herstellbaren Speisen in einer Ausführungsform Gasporen mit bloßem Auge sehen. Diese Gasporen kann man beim Aufschneiden und/oder Auseinandertrennen mit bloßem Auge sehen.

Eine Speise der vorliegenden Erfindung, die vorzugsweise mit den erfindungsmäßen Verfahren erhältlich ist, erhalten wird oder erhalten werden kann, ist gegenüber bekannten Speisen in ihrem Volumen vorzugsweise doppelt bis dreifach größer, am meisten bevorzugt zweieinhalbfach größer. Das Volumen der erfindungsgemäßen breiigen Masse oder der vorzugsweise daraus resultierenden erfindungsgemäßen Speise, beide sind hierin beschrieben, wird vorzugsweise unmittelbar nach dem Garen der breiigen (aufgegasten) Masse, die beim Garen zur hierin beschriebenen Speise wird, bestimmt, vorzugsweise wie hierin beschrieben durch Volumenverdrängung.

Eine Speise der vorliegenden Erfindung, die vorzugsweise mit den erfindungsmäßen Verfahren erhältlich ist, erhalten wird oder erhalten werden kann, enthält vorzugsweise tote und/oder lebende Säure-bildende Mikroorganismen, insbesondere Milchsäurebakterien und tote und/oder lebende CO₂-bildenden Mikroorganismen, insbesondere Hefen. Die Säurebildende Mikroorganismen, insbesondere Milchsäurebakterien kommen durch das erste Fermentieren in die breiige Masse, die dann gegart wird. Die CO₂-bildenden Mikroorganismen, insbesondere Hefen, kommen durch das zweite Fermentieren in die breiige Masse, die dann gegart wird. Auf Grund der beim zweiten Fermentieren eingebrachten CO₂-bildenden Mikroorganismen, insbesondere Hefen, insbesondere S. cerevisiae, hat eine erfindungsgemäße Speise vorzugsweise eine dezenten Hefegeschmack.

Eine Speise der vorliegenden Erfindung, die vorzugsweise mit den erfindungsmäßen Verfahren erhältlich ist, erhalten wird oder erhalten werden kann, weist vorzugsweise eine hohe Elastizität auf. Die Elastizität kann dabei mit dem Fachmann bekannten Verfahren objektiv gemessen werden, bspw. mittels einer Textur Profil Analyse (TPA). Dabei kann bspw. die Krumenhärte (N) und Krumenelastizität (%) gemäß der AACC (American Association of Cereals Chemists) Methode 74-09 gemessen werden wie auch in WO 2011/151331, Seiten 9 und 10 beschrieben.

Eine bevorzugte Speise der vorliegenden Erfindung, die vorzugsweise mit den erfindungsmäßen Verfahren erhältlich ist, erhalten wird oder erhalten werden kann, hat vorzugweise nach dem Fermentieren und Garen eine 2-fache Volumenvergrößerung, mehr bevorzugt eine 2,5-fache bis 3-fache Volumenvergrößerung, bevorzugt eine 2,5-fache Volumenvergrößerung erfahren, hat vorzugsweise einen dezenten Hefegeschmack und enthält neben toten und/oder lebenden Säure-bildenden Mikroorganismen, vorzugsweise Milchsäurebakterien auch lebende und/oder tote CO₂-bildenden Mikroorganismen, vorzugsweise Hefe, z.B. S. cerevisiae. Speisen, wie in WO2017140796 beschrieben, weisen nach dem Garen höchstens eine 1,5-fache Volumenvergrößerung auf, so dass diese Speisen auch eine geringere Porosität als Speisen der vorliegenden Erfindung aufweisen.

Vorzugsweise enthält eine Speise der vorliegenden Erfindung, die vorzugsweise mit den erfindungsmäßen Verfahren erhältlich ist, erhalten wird oder erhalten werden, kann keine *Leuconostoc ssp.* z.B. *L. mesenteroides* und/oder *L. plantarum* und/oder *Pediococcus ssp.,* z.B. *Pediococcus pentasaceus.* Vorzugsweise enthält eine Speise der vorliegenden Erfindung, die vorzugsweise mit den erfindungsmäßen Verfahren erhältlich ist, erhalten wird oder erhalten werden kann *Leuconostoc ssp.* z.B. *L. mesenteroides* und/oder *L. plantarum* in einer Anzahl von weniger als 10⁷ cfu, 10⁶ cfu, 10⁵ cfu oder weniger pro Gramm (g) breiige Masse (im Englischen "batter") aus der sie hergestellt werden kann, hergestellt wird oder herstellbar ist, d.h. die Speise enthält *Leuconostoc ssp.* z.B. *L. mesenteroides* und/oder *L*. *plantarum* in einer Anzahl von weniger als 10⁷ cfu/g batter, 10⁶ cfu/g batter, 10⁵ cfu/g batter oder weniger, aus dem sie hergestellt werden kann, hergestellt wird oder herstellbar ist.

Vorzugsweise enthält die Speise der vorliegenden Erfindung, die vorzugsweise mit den erfindungsmäßen Verfahren erhältlich ist, erhalten wird oder erhalten werden keine lebenden du/oder toten *Debaryomyces ssp.* Hefen, z.B. *Debaryomyces hansenii.*

Eine bevorzugte Ausführung des erfindungsgemäßen Verfahrens bzw. der damit erhältlichen Speise, einer Speise die damit erhalten wird oder erhalten werden ist wie folgt:

Das Angebot an vegetarischen und veganen Speisen ist sehr begrenzt, daher soll eine Speise, vorzugsweise mit dem hierin beschriebenen erfindungsgemäßen Verfahren, produziert werden, die sich idealerweise durch Folgendes auszeichnet:
- Der hohe Stärkeanteil führt nicht zu einem schnellen Anstieg des Blutzuckergehalts und einem starken nachfolgendem Abfall desselben, was zu Müdigkeit führen kann. Bei Diabetikern wird dadurch der Blutzuckergehalt wesentlich leichter kontrollierbar, wodurch die Zahl der Insulinspritzen pro Tag vermindert werden kann.
- Gesunde und heilende Wirkung auf das Mikrobiom des Darms durch hohen Anteil an Präbiotika / Ballaststoffen, dadurch besonders geeignet für Personen mit Magen- und Darmempfindlichkeit.
- Geeignet als vollwertige warme eiweißreiche, vitaminreiche und gesunde Mahlzeit.
- Reich an Vitaminen, besonders Vit. B-Komplex und Omega-3 Fettsäuren.
- schadstoffarm
- Eignung für Systemgastronomie / traditionelle Gastronomie / Franchise / Foodtrucks Im Folgenden wird beispielhaft eine bevorzugte Speise beschrieben, die mit dem erfindungsgemäßen Verfahren erhältlich ist, erhalten wird oder erhalten werden kann:

Die Grundstoffe der neuartigen vorzugsweisen vegetarischen bzw. veganen Speise bestehen aus den hierin genannten Einzelkomponenten, vorzugsweise aus zwei Hauptkomponenten, nämlich Getreide/Pseudogetreide und Leguminosen/Ölsaaten. Auf diese Weise werden hohe Proteingehalte erzielt.

Die Speisen können vorzugsweise zur geschmacklichen Abrundung Salz, Zucker oder andere Süßungsmittel, Gewürze, Speiseöl, Milchprodukte, und Mehle aus beliebigen Nüssen enthalten.

In geringen Prozentsätzen können vorzugsweise Wurzelgemüse, Wurzelknollen wie Kartoffeln/Süßkartoffeln und in sehr geringen Maße Mittel zur Feuchtigkeitserhöhung zugefügt werden.

Die Innovation ergibt sich aus der Kombination der Verfahrensschritte der Herstellung, wie hierin beschrieben, zusammen mit der Zusammensetzung der Produkte, die idealerweise zu positiven diätetischen und gesundheitlichen Wirkungen führen.

Diese Kombination der Herstellungsprozesse optimiert idealerweise die Reduzierung von Bitterstoffen, kurzkettigen Kohlehydraten und unerwünschten Stoffen (z.B. insbesondere Arsen und Quecksilber in Reis und/oder unbekömmliche sekundäre Pflanzenmetabolite in Leguminosen). Bei Mais ermöglicht dieses Verfahren eine in den Produktionsprozess integrierte Nixtamalisation, durch die der Niacingehalt des Mais (Vitamin B3) für die menschliche Ernährung verfügbar wird. Das Resultat ist ein Produkt, das außerordentlich magen- und darmschonend ist und das Mikrobiom des Verdauungssystems unterstützt.

Beispielhafte Liste bevorzugter Komponenten für die erfindungsgemäße Speise:
- Getreidekomponenten: (Poaceae): Reis, Weizen, Dinkel, Hafer, Gerste, Roggen, Mais, Echte Hirsen (Paniceae), Sorghumhirsen (Sorghum), Zwerghirse (Eragrostis tef), Triticale (Kreuzung aus Weizen und Roggen)
- Pseudogetreidekomponenten: Buchweizen (Fagopyrum esculentum), Sesam (Sesamum indicum), Amaranth (Amarantus sp.), Quinoa (Chenopodium quinoa), Chia (Salvia hispanica)
- Hülsenfrüchtekomponenten (Leguminosae): Linsen, Bohnen, Erbsen, Erdnüsse, Kichererbsen, Soja, Süßlupine.
- Ölsaatenkomponenten: Kürbiskerne, Leinsamen, Hanfsamen, Mohnsamen

Beispielhafte, bevorzugte Ausführungsformen des erfindungsgemäßen Verfahrens:
1. Ausführungsform 1:
   Die verwendeten Leguminosen sowie Reis und Mais werden nach einer Quellung in Wasser nass vermahlen. Weitere Zusätze können nass oder trocken vermahlen werden.
   - Es wird vorzugsweise stets eine Kombination einer Getreide/Pseudogetreide Komponente mit einer Leguminosenkomponente und/oder Ölsaatenkomponente verwendet (siehe "Beispielhafte Liste bevorzugter Komponenten für die erfindungsgemäße Speise") verwendet
   - Diesen beiden Hauptkomponenten können durch geringe Prozentsätze weiterer Komponenten ergänzt werden kann. Durch eine mehrstufige, vorzugsweise zweistufige Fermentation wird eine breiartige Masse erzeugt.
   - Diese Masse wird in beliebigen Formen im Wasserdampf gegart.
2. Bevorzugte Ausführungsform 2 zur Ausführungsform 1:
   - Als weitere Zusätze können Gewürze, Salz, Zucker, Milchprodukte, Mehle aus beliebigen Nüssen, Gemüse, geriebene Kartoffeln/Süßkartoffeln sowie in sehr geringen Maße Mittel zur Feuchtigkeitserhöhung beigemischt werden.
3. Bevorzugte Ausführungsform 3 (nämlich Weiterverarbeitung) zur Ausführungsform 1 und 2:
   Der Stärkeanteil der gegarten Produkte kann durch temperieren bei 0°C +/- 7°C weitgehend in retrogradierte Stärke umgewandelt werden, die langsamer vom Darm aufgenommen wird.
4. Bevorzugte Ausführungsform 4 zur Ausführungsform 1:
   Kombination der in Ausführungsform 1 angeführten Herstellungsschritte und Inhaltsstoffe.

Spezifische, beispielhafte, bevorzugte Ausführungsform der Erfindung:
Reis, Mais und Leguminosen werden vor der Verarbeitung in Wasser gequollen, wobei das Quellwasser verworfen wird. Danach werden die gequollenen Komponenten nass vermahlen. Die gewählte Mischung wird durch mehrstufige, vorzugsweise zweistufige Fermentation mit verschiedenen Fermenten, vorzugsweise einem ersten und zweiten Ferment, wie hierin beschrieben, zu einer breiartigen Masse vergoren. Die breiartige Masse wird in verschiedenen Formen dampfgegart. Durch Temperieren der gegarten Produkte bei geeigneten Temperaturen wird die Stärke zum großen Teil in retrogradierte Stärke umgewandelt.

Im Zusammenhang mit der vorliegenden Erfindung umfassen Singularformen wie "ein" oder "eine" auch jeweils die Pluralformen und umgekehrt, sofern an betreffender Stelle nichts anderes bestimmt ist.

Der Begriff "und/oder" wie hierin verwendet umfasst jeweils die Bedeutungen "und", "oder", sowie "alle oder jede einzelne Kombination aus zwei oder mehr Elementen der durch den Begriff gruppierten Bestandteile".

Der Begriff "umfassend" oder "einschließlich" umfasst dabei auch den einschränkenderen Begriff "bestehend aus", soweit an betreffender Stelle nichts anderes bestimmt ist.

Die vorliegende Erfindung ist generell nicht auf bestimmte Ausführungsformen, Beispiele, Protokolle oder ähnliches wie hierin beschrieben beschränkt. Derartige Ausführungsformen, Beispiele, Protokolle oder ähnliches dienen vielmehr der Verdeutlichung der Erfindung, ohne diese aber darauf zu beschränken.

Alle hier zitierten Publikationen sind hiermit in ihrer Gänze als Bestandteil der Beschreibung aufgenommen. Insofern es Inkonsistenzen zwischen dem Inhalt der zitierten Publikationen und der vorliegenden Beschreibungen der Erfindung gibt, hat die vorliegende Beschreibung Vorrang.

### Beispiele:

### Beispiel 1: Mais-Speise

### Zutaten:

| | | |
|---|---|---|
| 2000g Maiskörner | 4,6 I Wasser | 80g Salz(85) |
| 1600g Urid Dal Bohnen | 300g Yoghurt | 30g Sauerteig |
| 400g Reis | 300g Erdnussöl | 100g Hefe + 15g Zucker + 100 ml H₂O |

### Beispiel 2: Kürbiskern-Speise

### Zutaten:

| | | |
|---|---|---|
| 1,8 kg Kürbiskerne | 5,15 I Wasser | 120g Salz |
| 900g Urid Dal Bohnen | 450g Yoghurt | 45g Sauerteig |
| 1,8 kg Reis | 150g Kürbiskernöl | 150g Hefe + 22,5g Zucker+ 100 ml H₂O |

### Zubereitung für Beispiel 1 und Beispiel 2:

a) Quellen lassen
   Reis und Mais bzw. Kürbiskerne werden zusammen in 3-facher Menge Wasser für 10-12 h bei 20-25° C gequollen. Urid Dal wird getrennt für 6-8 h bei 20-25° C gequollen. Das überschüssige Wasser wird verworfen.
b) Nassvermahlung
   Reis wird zusammen mit Mais bzw. Kürbiskernen zu einer Paste gemahlen. Urid Dal wird getrennt gemahlen.
c) Fermentation 1
   Reis zusammen mit Mais bzw. Kürbiskernen und Urid Dal separat werden anteilig mit Yoghurt, Salz, Erdnussöl bzw. Kürbiskernöl und Sauerteig versetzt. Wasser wird anteilig so zugegeben, dass die Gesamtwassermenge inklusive des bei der Quellung aufgenommenen Wassers die angegebenen Werte erreicht. Die Masse wird danach gut durchgerührt.
   Reis zusammen mit Mais bzw. Kürbiskernen wird 10-12 h bei 30 - 32° C fermentiert.
   Die Urid Dal Masse wird 6-8 h fermentiert.
d) Fermentation 2
   Urid Dal und die in Zuckerwasser aufgelöste Hefe wird der jeweiligen Masse zugegeben. Danach wird die Masse sofort in die Gefäße zum Garen dosiert und 15 - 25 min bei 30 - 32° C zur Volumenvermehrung fermentiert.
e) Garen
   Anschließend wird die abgefüllte Masse gegart.

## Patentansprüche

1. Verfahren zum Herstellen einer breiigen Masse, umfassend
(a) Quellen lassen von Getreide, Pseudogetreide, Hülsenfrucht und/oder Ölsaat;
(b) Nassvermahlen des gequollenen Getreides, Pseudogetreides, der Hülsenfrucht und/oder Ölsaat zu einer breiigen Masse;
(c) erstes Fermentieren der breiigen Masse unter Verwendung von Säure-bildenden Mikroorganismen; und
(d) zweites Fermentieren der bereits fermentierten breiigen Masse unter Verwendung von CO₂-bildenden Mikroorganismen,
wobei erstes und zweites Fermentieren zeitlich und/oder räumlich getrennt voneinander stattfindet.

2. Verfahren nach Anspruch 1, umfassend
(c') Abfüllen oder Überführen der einmal fermentierten Masse in ein anderes Gefäß.

3. Verfahren nach Anspruch 1 oder 2, umfassend
(e) gegebenenfalls Mischen der zweifach fermentierten breiigen Masse(n).

4. Verfahren nach einem der vorhergehenden Ansprüche, weiterhin umfassend Zugeben von Gewürzen, Salz, Speiseöl, Süßungsmittel, Milchprodukten, Nussmehl, zerkleinertem Gemüse und/oder Mittel zur Feuchtigkeitserhöhung .

5. Verfahren nach einem der vorhergehenden Ansprüche, wobei das erste Fermentieren 8 bis 14h beträgt.

6. Verfahren nach einem der vorhergehenden Ansprüche, wobei das zweite Fermentieren 15 bis 25 Minuten beträgt.

7. Verfahren nach einem der vorhergehenden Ansprüche, wobei das Getreide Reis, Weizen, Dinkel, Hafer, Gerste, Roggen, Mais oder echte Hirse ist.

8. Verfahren nach einem der vorhergehenden Ansprüche, wobei das Pseudogetreide Buchweizen, Sesam, Amaranth, Quinoa oder Chia ist.

9. Verfahren nach einem der vorhergehenden Ansprüche, wobei die Hülsenfrucht Linsen, Bohnen, Erbsen, Erdnüsse, Kichererbsen, Soja oder Süßlupine ist.

10. Verfahren nach einem der vorhergehenden Ansprüche, wobei die Ölsaat Kürbiskerne, Leinsamen, Hanfsamen oder Mohnsamen ist.

11. Verfahren nach einem der vorhergehenden Ansprüche, wobei der Anteil der Hülsenfrucht bei zumindest 30% liegt.

12. Verfahren nach einem der vorhergehenden Ansprüche, wobei bei keinem Schritt ein künstliches Treibmittel, beispielsweise Backpulver zugegeben wird.

13. Breiige Masse erhalten oder erhältlich gemäß dem Verfahren nach einem der Ansprüche 1 bis 12.

14. Verfahren zum Herstellen einer Speise, umfassend
(f) Garen der breiigen Masse gemäß Anspruch 13.

15. Speise, erhalten oder erhältlich gemäß dem Verfahren nach Anspruch 14.
